# EUROPÄISCHE PATENTSCHRIFT

(11) **EP 3 911 847 B1**
(45) Veröffentlichungstag und Bekanntmachung des Hinweises auf die Patenterteilung: **28.08.2024**
(21) Anmeldenummer: 19818034.1
(22) Anmeldetag: 09.12.2019
(51) Int. Cl.: F01N 3/04, F01N 13/10, F02D 37/02, F02D 41/00, F01P 3/02

(54) **FREMD GEZÜNDETE BRENNKRAFTMASCHINE UND VERFAHREN ZUM BETREIBEN DER BRENNKRAFTMASCHINE**
APPLIED-IGNITION INTERNAL COMBUSTION ENGINE AND METHOD FOR OPERATING THE INTERNAL COMBUSTION ENGINE
MOTEUR À COMBUSTION INTERNE À ALLUMAGE COMMANDÉ ET PROCÉDÉ PERMETTANT DE FAIRE FONCTIONNER UN MOTEUR À COMBUSTION INTERNE

(30) Priorität: 17.01.2019 DE 102019101138
(43) Veröffentlichungstag der Anmeldung: 24.11.2021
(73) Patentinhaber: Bayerische Motoren Werke Aktiengesellschaft, 80809 München (DE)
(72) Erfinder: MESSING, Roman, 80798 München (DE)
(86) Internationale Anmeldenummer: PCT/EP2019/084250
(87) Internationale Veröffentlichungsnummer: WO 2020/148019

(56) Entgegenhaltungen:
- DE-A1- 10 254 683
- DE-A1- 102008 004 361
- DE-A1- 102008 047 722
- DE-A1- 102012 001 199
- DE-A1- 102014 104 402
- DE-A1- 102016 212 945
- US-A1- 2015 059 339

## Beschreibung

Die Erfindung betrifft eine fremd gezündete Brennkraftmaschine mit den Merkmalen aus dem Oberbegriff des Patentanspruchs 1 sowie ein Verfahren zum Betreiben der Brennkraftmaschine mit den Merkmalen aus dem Patentanspruch 7.

Zum technischen Umfeld wird bspw. auf die deutsche Offenlegungsschrift DE 10 2008 047 722 A1 hingewiesen. Aus dieser ist ein Verfahren zum Betreiben einer Abgasreinigungsanlage bekannt, die an einer mager betreibbaren Brennkraftmaschine, insbesondere einer Otto-Brennkraftmaschine, für ein Kraftfahrzeug angeordnet ist. Das Abgas der Brennkraftmaschine durchströmt in einer Abgasreinigungsanlage zuerst einen Stickoxidspeicherkatalysator und weiter einen SCR-Katalysator, wobei das Abgas eine von dem momentanen Betriebszustand der Brennkraftmaschine abhängige Abgastemperatur aufweist und neben weiteren auch Stickoxide als Schadstoffe enthält. Die Brennkraftmaschine wird mit einem mageren Luft- / Kraftstoffgemisch (λ > 1) betrieben, wenn der Betriebszustand der Brennkraftmaschine eine Abgastemperatur oberhalb einer bestimmten Temperatur erzeugt und während dieses mageren Betriebszustandes dem Abgas vor dem SCR-Katalysator ein Reduktionsmittel zugeführt wird. Die Brennkraftmaschine wird mit einem stöchiometrischen Luft- / Kraftstoffgemisch (λ = 1) betrieben, wenn der Betriebszustand der Brennkraftmaschine eine Abgastemperatur unterhalb der bestimmten Temperatur erzeugt. Durch dieses Verfahren wird der Zielkonflikt zwischen einem erhöhten Kraftstoffverbrauch durch langen Homogenbetrieb nach einem Kaltstart und einen NOₓ-Durchbruch durch eine nicht vorhandene Betriebsbereitschaft des SCR-Systems gelöst. Weiterhin wird auf die DE10254683A1 verwiesen, welche ein Verfahren zum Betreiben einer Brennkraftmaschine mit magerem und fettem Luft- / Kraftstoffgemisch (sogenannter Split-Lambda-Betrieb) offenbart.

Zur Erfüllung der Abgasgesetzgebung sind seit Jahrzehnten Abgaskatalysatoren im Einsatz, um die Schadstoffe in den Rohmission von Brennkraftmaschinen durch chemische Nachreaktionen auf ein Mindestmaß zu reduzieren. Um die Leistungsdichte der Brennkraftmaschinen zu erhöhen, sind Abgasturbolader seit Jahren Stand der Technik im Bereich von Brennkraftmaschinen. Da sowohl die katalytische Beschichtung als auch das Trägermaterial eines Katalysators sowie die Turbine eines Abgasturboladers nur bis zu einer gewissen Temperatur belastet werden dürfen, ist die maximale Abgastemperatur der Brennkraftmaschine auf diese Temperatur limitiert. Da sich des Weiteren das Abgastemperaturniveau proportional zur Leistungsdichte einer Brennkraftmaschine verhält, ist somit die Leistungsdichte der Brennkraftmaschine durch die maximal zulässigen Temperaturen für einen Abgasturbolader und einen Katalysator begrenzt.

Grundsätzlich liegt die maximal zulässige Temperatur vor einer Turbine eines Abgasturboladers über der des Katalysators, da die Turbine in Strömungsrichtung des Abgases vor dem Katalysator angeordnet ist. Gleichzeitig zieht die Turbine Enthalpie aus dem Abgasmassenstrom, um damit über den Verdichter die Ladeluft zu verdichten, wodurch sie im aufgeladenen Betrieb das Temperaturdelta zwischen Temperatur vor der Turbine und Temperatur vor dem Katalysator noch weiter erhöht.

Aufgrund des Zusammenhangs zwischen Abgastemperaturbegrenzung durch die oben genannten Bauteile und der Leistungsdichte der Brennkraftmaschine, gibt es bereits viele Technologien und Betriebsstrategien für Brennkraftmaschinen, um die Abgastemperatur abzusenken und somit die Leistungsdichte der Brennkraftmaschine zu erhöhen. Zwei dieser Möglichkeiten sind die so genannte, dem Fachmann bekannte Miller-Strategie und der gekühlte Abgaskrümmer, welcher unter anderem auch im Zylinderkopf der Brennkraftmaschine umgesetzt sein kann. In diesem Fall spricht man von einem zylinderkopfintegrierten Krümmer (ZIK). Während der gekühlte Abgaskrümmer die Abgastemperatur erst nach den Gaswechselauslassventilen absenken kann und darüber das gesamte Niveau der Abgastemperatur absenkt, wirkt die Miller-Strategie bereits im Brennraum. Durch kühlere Prozesstemperaturen wird die Klopfneigung der Brennkraftmaschine abgesenkt, wodurch die so genannte Verbrennungsschwerpunktlage nach früh verschoben werden kann. Der Verbrennungsprozess wird in diesem Fall optimaler und senkt somit ebenfalls die Abgastemperaturen.

Die klassische Anfettung, bei der mehr Kraftstoffmasse eingespritzt wird als beim momentanen Betriebspunkt der Brennkraftmaschinen notwendig ist und somit zur Kühlung beiträgt, als auch die Abmagerung, also eine höhere Luftmasse als momentan notwendig, sind ebenfalls Maßnahmen, um die Abgastemperatur abzusenken.

Die gerade beschriebene Anfettung (λ < 1), welche bis heute Stand der Technik ist, wird aufgrund der zukünftigen Emissionierung nicht mehr eingesetzt. Hierdurch ergeben sich hohe Einbußen hinsichtlich der Leistungsdichte der Brennkraftmaschinen. Ebenso stellt auch die Abmagerung (λ > 1) aufgrund der erhöhten NOₓ-Emissionen erhöhte Anforderungen an das Abgasnachbehandlungssystems und ist somit mit hohen Kosten verbunden.

Aus der deutschen Offenlegungsschrift DE 10 2014 216 461 A1, von der die vorliegende Erfindung ausgeht, ist eine Brennkraftmaschine mit einem Zylinderkopf für vier Zylinder in Reihe und mit einem einlassseitigen und einem auslassseitigen Gaswechselventiltrieb bekannt. Innerhalb des Zylinderkopfes münden ein erster Auslasskanal des ersten Zylinders in einen zweiten Auslasskanal des zweiten Zylinders und ein vierter Auslasskanal des vierten Zylinders in einen dritten Auslasskanal des dritten Zylinders, wobei eine Steuerzeit des auslassseitigen Gaswechselventiltriebs verkürzbar ist. Durch diese erfindungsgemäße Ausgestaltung der Brennkraftmaschine werden Verbesserungen hinsichtlich des Kraftstoffverbrauchs und des Ansprechverhaltens der Brennkraftmaschine erzielt.

Aus Gründen des Bauteilschutzes, insbesondere zum Schutz einer Abgasreinigungsanlage, wie bspw. einem Katalysator, ist es wünschenswert, die Abgastemperatur einer Brennkraftmaschine zu reduzieren.

Aufgabe der vorliegenden Erfindung ist es, eine Maßnahme zur Reduzierung der Abgastemperaturen einer Brennkraftmaschine aufzuzeigen.

Diese Aufgabe wird vorrichtungsmäßig durch die Merkmale im kennzeichnenden Teil des Patentanspruchs 1 sowie verfahrensmäßig durch die Merkmale im Patentanspruch 7 erzielt.

Durch das erfindungsgemäße Konzept, des sog. λ-Splits, können die Abgastemperaturen abgesenkt werden, ohne dabei global den λ=1-Betrieb zu verlassen und somit hinsichtlich der Emissionierung keine weiteren Aufwände hervor zu rufen. In Kombination mit einem zylinderkopfintegrierten Krümmer kann darüber hinaus über zylinderindividuelle Zündwinkel das Temperaturgefälle zwischen den einzelnen Fluten abgesenkt werden und weiteres Leistungspotenzial der Brennkraftmaschine gehoben werden.

Vorteilhafte Weiterbildungen der Erfindung sind in den Unteransprüchen beschrieben.

In einer besonders bevorzugten Ausführungsform gemäß Patentanspruch 2 ist zwischen dem Abgaskrümmer und der Abgasreinigungsanlage ein Turbinengehäuse eines Abgasturboladers in der Abgasanlage angeordnet. Durch diese Maßnahme kann die Erfindung nicht nur für Saug-Brennkraftmaschinen sondern auch für Brennkraftmaschinen mit einem Abgasturbolader eingesetzt werden.

Die Ausgestaltung gemäß Patentanspruch 3 ist eine besonders bevorzugte Ausführungsvariante. Mit dieser kompakten Ausführung wird eine besonders gute Abgaskühlung, insbesondere mit einem zylinderindividuellen Zündwinkel, erzielt.

Eine weitere Verbesserung der Kühlung des Abgases ist mit einer Ausgestaltung gemäß Patentanspruch 4 zu erreichen.

Die Ausgestaltung gemäß Patentanspruch 5 erhöht die Dynamik der Brennkraftmaschine in vorteilhafter Weise.

Eine konsequente Flutentrennung gemäß Patentanspruch 6 ist wiederum eine besonders bevorzugte Ausführungsform.

Mit der Brennkraftmaschine gemäß Patentanspruch 1 ist nun ein Verfahren zum Betreiben der fremdgezündeten Brennkraftmaschine gemäß Patentanspruch 7 mit folgenden Verfahrensschritten möglich:
- Einbringen von Luft und Kraftstoff in den ersten Brennraum mit einem fetten Verhältnis,
- Zünden und Verbrennen des Kraftstoff- / Luftgemisches in dem ersten Brennraum,
- Abführen des Abgases durch die Abgasanlage,
- Einbringen von Luft und Kraftstoff in den zweiten Brennraum mit einem mageren Verhältnis,
- Zünden und Verbrennen des Kraftstoff- / Luftgemisches in dem zweiten Brennraum,
- Abführen des Abgases durch die Abgasanlage.

Eine nochmalige Absenkung der Abgastemperatur ist durch die Verfahrensschritte gemäß Patentanspruch 8 erzielbar:
- Anpassen einer Verbrennungsschwerpunktlage in dem ersten Brennraum, bis eine Abgastemperatur aus dem ersten Brennraum ein Minimum aufweist,
- Anpassen einer Verbrennungsschwerpunktlage in dem zweiten Brennraum, bis eine Abgastemperatur aus dem zweiten Brennraum ein Minimum aufweist.

### Mit anderen Worten ausgedrückt:

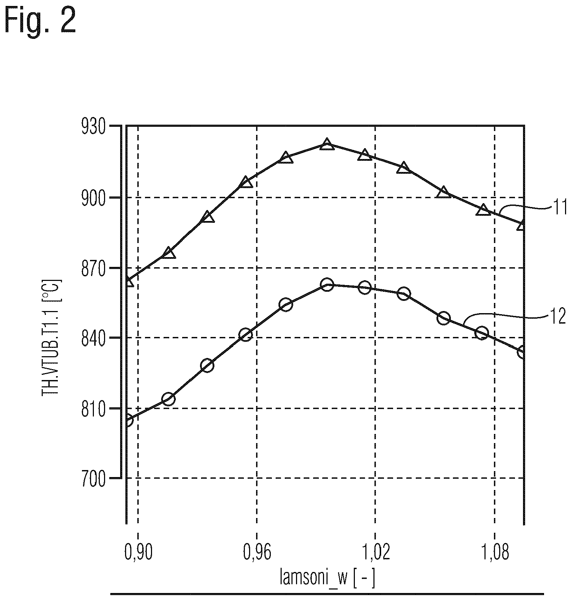

Im Rahmen der vorliegenden Erfindung wird somit vorgeschlagen, die einzelnen Zylinder einer Brennkraftmaschine mit unterschiedlichen Lambdas, also einen Zylinder fett und den anderen Zylinder mager zu betreiben, um damit das Abgastemperaturniveau vor der Abgasreinigungsanlage bzw. vor der Turbine eines Abgasturboladers abzusenken (dargestellt in Fig. 2). Die "Vertrimmung" des Lambdas muss hierbei so erfolgen, dass das Abgaslambda nach einer Vermischung des Abgases der einzelnen Zylinder, vor der Abgasreinigungsanlage wieder exakt 1 ist und somit stöchiometrisch. Ein 3-Wege-Katalysator kann somit die Schadstoffe im Rohabgas, analog zum klassischen λ = 1 Betrieb, vollständig konvertieren. Bei Brennkraftmaschinen mit gerader Zylinderanzahl kann hierbei eine Hälfte der Zylinder mager und die andere Hälfte fett betrieben werden. Durch diesen erfindungsgemäßen Betrieb der Brennkraftmaschine wird die Abgastemperatur abgesenkt und somit kann die Leistungsdichte der Brennkraftmaschine erhöht werden. Werden zusätzlich die Zündwinkel, also der Zündzeitpunkt der einzelnen Zylinder individuell auf eine minimale Abgastemperatur angepasst, wird eine weitere Absenkung des Abgastemperaturniveaus erzielt. Dies liegt insbesondere daran, dass durch den fetten Betrieb die Klopfneigung deutlich absinkt, und somit eine bessere Verbrennungsschwerpunktlage realisiert werden kann, welche zusätzlich zur Temperaturabsenkung beiträgt. Je weiter ein Zylinder ins Mageren oder ins Fette verlegt wird, desto größer wird die Temperaturabsenkung im Vergleich zum normalen Betrieb. Ein λ kann hierbei zwischen 0,8 und 1,2 liegen. Durch diese Maßnahme ist eine Temperaturabsenkung des Abgases im Realbetrieb um bis zu 60 °C darstellbar.

In Kombination mit einem Twin-Scroll-Abgasturbolader bietet sich hierbei die Möglichkeit, den Temperaturunterschied zwischen den einzelnen Fluten zu verringern. Hierbei werden bspw. für den Fall einer vierzylindrigen Brennkraftmaschine die Zylinder 2 und 3, deren Abgas durch die kürzeren Wege im Abgaskrümmer weniger abkühlen, fett betrieben und somit das Abgas im Verhältnis zu den Zylindern 1 und 4 weiter abgekühlt. Der Temperaturunterschied zwischen den Scrolls wird somit geringer und der Bauteilschutz besser. Im Falle eines gekühlten Abgaskrümmers, wo dieser Effekt noch stärker zum Tragen kommt, ist diese Vorgehensweise noch hilfreicher. Da insbesondere durch die fett betriebenen Zylinder große Mengen an unverbrannten Kraftstoffresten und Kohlenmonoxid im Rohabgas der Brennkraftmaschine auftreten und durch die mager betriebenen Zylinder Sauerstoffüberfluss in das Rohabgas gelangt, steigt durch deren Umsetzung in der Abgasreinigungsanlage die Wärmefreisetzung tendenziell an. Die Temperatur in der Abgasreinigungsanlage steigt somit etwas. Da aber insbesondere durch den mageren Betrieb die Kohlenmonoxid-Emission dieser Zylinder sehr niedrig ist, hält sich der Anstieg dieser Exothermen in Grenzen. Der Split-Faktor, also wie der Fett- und Magerbetrieb je Zylinder eingestellt wird, muss somit spezifisch für jede Brennkraftmaschine eingestellt werden.

Für Brennkraftmaschinen, deren Abgas aller Zylinder bereits vor der Abgasreinigungsanlage bzw. vor der Turbine des Abgasturboladers zusammengeführt wird, kann es durch die hohen Temperaturen bereits vor der Abgasreinigungsanlage bzw. der Turbine zu Nachreaktionen kommen. Hierdurch ist die Temperaturabsenkung durch den Lambda-Split geringer, aber immer noch vorhanden. In diesem Fall kann es, je nach konstruktiver Ausführung vorteilhaft sein, dass nicht entsprechend der Zündfolge auf einen mageren ein fetter Abgaspuls folgt, sondern mehrere fette gefolgt von der gleichen Anzahl mehrerer magerer Pulse. Die Nachreaktionen werden somit aufgrund der längeren zeitlichen Trennung zwischen mager und fett reduziert und somit wieder in den Katalysator verlagert. Letzterer ist in der Lage Sauerstoff einzuspeichern und somit die zeitliche Verschiebung zwischen den zur vollständigen Umwandlung notwendigen Reaktionspartnern abzupuffern.

Im Folgenden ist die Erfindung anhand von zwei Figuren näher erläutert.
- Fig. 1: zeigt schematisch eine erfindungsgemäße Brennkraftmaschine.
- Fig. 2: zeigt in einem Diagramm die erfindungsgemäße Wirkung.

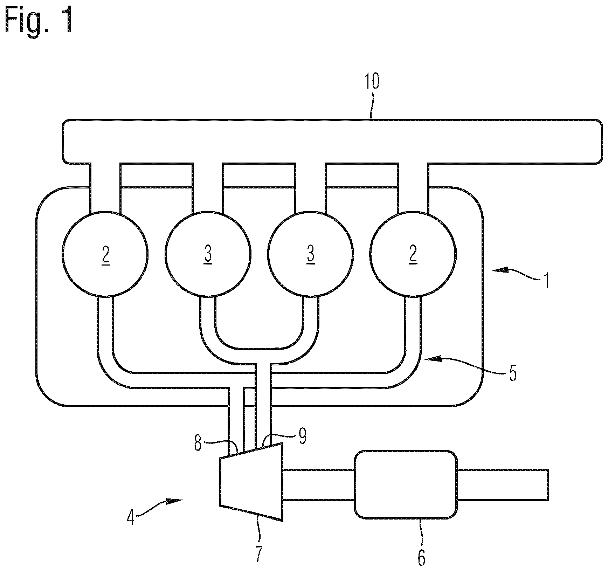

Fig. 1 zeigt schematisch eine erfindungsgemäße, beispielsweise vierzylindrige Brennkraftmaschine 1. Durch einen Luftsammler 10 saugt die Brennkraftmaschine Frischluft für ihre zwei ersten Brennräume 2 und ihre zwei zweiten Brennräume 3. Die Brennräume, die auch den einzelnen Zylindern entsprechen, sind durch Kreis symbolisch dargestellt. Hier kann bspw. die Gemischbildung durch direkte Einspritzung in die Brennräume 2, 3 und/oder in den Luftsammler 10 erfolgen. In den Brennräumen 2, 3 wird dieses Kraftstoff-Luftgemisch verbrannt und durch einen Abgaskrümmer 5 in eine Abgasanlage 4 ausgestoßen. Im vorliegenden Ausführungsbeispiel durchströmen die Abgase zuerst ein Turbinengehäuse 7 eines nicht näher dargestellten Abgasturboladers und weiter eine Abgasreinigungsanlage 6. Diese Abgasreinigungsanlage 6 kann bspw. ein 3-Wege-Katalysator sein. Das Turbinengehäuse 7 und die Abgasreinigungsanlage 6 sind Teil der Abgasanlage 4.

In diesem vorliegenden Ausführungsbeispiel ist der Abgaskrümmer 5 in den Zylinderkopf integriert (ZIK), muss es aber nicht sein. Unabhängig davon, ob der Abgaskrümmer 5 in dem Zylinderkopf der Brennkraftmaschine 1 integriert ist oder nicht, auch unabhängig davon, ob es sich um einen Gusskrümmer oder einen Luftspalt isolierten Abgaskrümmer 5 handelt, wird ein erster Abschnitt der Abgasanlage 4 vom den ersten Brennräumen 2 zur Turbine 7 besser gekühlt als von den zweiten Brennräumen 3 zur Turbine 7. In einem anderen Ausführungsbeispiel kann die Turbine 7 auch entfallen, sodass die Abgasreinigungsanlage 6 das erste Bauteil ist, welches von dem Abgas in der Abgasanlage 4 durchströmt wird. Weiter wird in dem vorliegenden Ausführungsbeispiel die Abgasanlage 4 innerhalb des Zylinderkopfes der Brennkraftmaschine 1 gekühlt, insbesondere Flüssigkeit gekühlt.

Weiter ist im vorliegenden Ausführungsbeispiel die Turbine 7 zweiflutig ausgeführt, d. h. es handelt sich um eine so genannte Twin-Scroll-Turbine, mit einem ersten Scroll 8 und einem zweiten Scroll 9. Auch einflutige Turbinen, sog. Mono-Scroll-Turbinen können für die erfindungsgemäße Brennkraftmaschine 1 eingesetzt werden. Bevorzugt münden der erste Abschnitt der Abgasreinigungsanlage 4 in den ersten Scroll und der zweite Abschnitt der Abgasreinigungsanlage 4 in den zweiten Scroll 9.

Mit der hier vorliegenden, fremd gezündeten Brennkraftmaschine 1 ist nun ein Verfahren zum Betreiben mit folgenden Verfahrensschritten möglich:
- Einbringen von Luft und Kraftstoff in den ersten Brennraum 2 mit einem mageren Verhältnis (λ > 1),
- Zünden und Verbrennen des Kraftstoff- / Luftgemisches in dem ersten Brennraum 2,
- Abführen des Abgases durch die Abgasanlage 4,
- Einbringen von Luft und Kraftstoff in den zweiten Brennraum 3 mit einem fetten Verhältnis (λ < 1),
- Zünden und Verbrennen des Kraftstoff- / Luftgemisches in dem zweiten Brennraum 3,
- Abführen des Abgases durch die Abgasanlage 4.

Eine weitere Absenkung des Abgastemperaturniveaus ist durch folgende Verfahrensschritte möglich:
- Anpassen einer Verbrennungsschwerpunktlage in dem ersten Brennraum 2, bis eine Abgastemperatur aus dem ersten Brennraum 2 ein Minimum aufweist,
- Anpassen einer Verbrennungsschwerpunktlage in dem zweiten Brennraum 3, bis eine Abgastemperatur aus dem zweiten Brennraum 3 ein Minimum aufweist.

Diese Anpassung der Verbrennungsschwerpunktlage kann bspw. mit einem Motorsteuergerät erfolgen, welches die Daten durch Messsensoren bereitgestellt bekommt oder wobei die Daten in einem Kennfeld abgelegt sind.

Die Verbrennungsschwerpunktlage gibt die Kurbelwinkelposition an, bei der 50% des Kraftstoffgemischs umgesetzt ist und wird weiter als Maß für den Wirkungsgrad der Verbrennung herangezogen. Eine vom Wirkungsgrad optimale Verbrennung für Otto-Brennkraftmaschinen liegt bei einer Schwerpunktlage von ca. 8 Grad Kurbelwinkel nach dem Zünd-OT.

Fig. 2 zeigt die Wirkung des erfindungsgemäßen Verfahrens in einem Diagramm.

Über eine y-Achse ist eine Temperatur des Abgases vor der Abgasreinigungsanlage 6 bzw. vor der Turbine 7 aufgezeichnet, von 780 °C bis 930 °C. Über eine x-Achse ist ein zylinderselektives λ dargestellt, in einem Bereich von 0,9 bis 1,08.

Ein erster Graph ist mit 11 beziffert, der stellvertretend ist für die Abgastemperatur aus dem ersten Brennraum 2 vor der Abgasreinigungsanlage 6, bei Variation des Lambdas von 0,9 bis 1,08. Ein zweiter Graph ist mit 12 beziffert, der stellvertretend ist für die Abgastemperatur, die aus dem zweiten Brennraum 3 austritt vor der Abgasreinigungsanlage 6 bei Variation des Lambdas von 0,9 bis 1,08. Die Messungen, die die Basis für die Graphen darstellen, sind eine Verstellung des Lambdas gleichmäßig auf allen Zylindern einer mehrzylindrigen Brennkraftmaschine zur Darstellung des erfindungsgemäßen Effekts.

Wie in dem Diagramm erkennbar ist, ist eine Abgastemperaturabsenkung im fetten Bereich bei ca. λ=0,9 etwa 60° kälter als beim Betrieb mit λ1, während bei einem mageren Gemisch bei ca. λ=1,08 die Temperaturabsenkung ca. 40 °C beträgt. Eine weitere Absenkung im fetten Betrieb ist insbesondere durch eine Anpassung des Zündwinkels möglich.

### Bezugszeichenliste

- 1.: Brennkraftmaschine
- 2.: erster Brennraum
- 3.: zweiter Brennraum
- 4.: Abgasanlage
- 5.: Abgaskrümmer
- 6.: Abgasreinigungsanlage
- 7.: Turbinengehäuse
- 8.: erster Scroll
- 9.: zweiter Scroll
- 10.: Luftsammler
- 11.: Abgastemperatur erster Brennraum
- 12.: Abgastemperatur zweiter Brennraum

## Patentansprüche

1. Fremd gezündete Brennkraftmaschine (1) mit zumindest einem ersten Brennraum (2) und einem zweiten Brennraum (3), in denen ein Kraftstoff-/Luftgemisch verbrennbar ist, wobei an die Brennräume eine Abgasanlage (4) angeordnet ist und wobei ein Abgas von einer Verbrennung des Kraftstoff-/Luftgemisches zuerst einen Abgaskrümmer (5) und anschließend eine Abgasreinigungsanlage (6) in der Abgasanlage (4) durchströmt, wobei ein erster Abschnitt der Abgasanlage (4) vom ersten Brennraum (2) zur Abgasreinigungsanlage (6) besser gekühlt ist als ein zweiter Abschnitt der Abgasanlage (4) vom zweiten Brennraum (3) zur Abgasreinigungsanlage (6),
**dadurch gekennzeichnet, dass** der erste Brennraum (2) mit einem mageren (λ > 1) Kraftstoff-/Luftgemisch betreibbar ist und der zweite Brennraum (3) mit einem fetten (λ < 1) Kraftstoff-/Luftgemisch betreibbar ist, wobei ein Gesamt-Abgaslamda beim Eintritt in die Abgasreinigungsanlage (6) stöchiometrisch (λ = 1) ist.

2. Brennkraftmaschine nach Anspruch 1,
**dadurch gekennzeichnet, dass** zwischen dem Abgaskrümmer (5) und der Abgasreinigungsanlage (6) ein Turbinengehäuse (7) eines Abgasturboladers (8) in der Abgasanlage (4) angeordnet ist.

3. Brennkraftmaschine nach Anspruch 1 oder 2,
**dadurch gekennzeichnet, dass** der Abgaskrümmer (5) zumindest abschnittsweise in einem Zylinderkopf der Brennkraftmaschine (1) integriert ist.

4. Brennkraftmaschine nach einem der Ansprüche 1 bis 3,
**dadurch gekennzeichnet, dass** der Abgaskrümmer (5) gekühlt, insbesondere Flüssigkeit gekühlt ist.

5. Brennkraftmaschine nach einem der Ansprüche 2 bis 4,
**dadurch gekennzeichnet, dass** der Abgasturbolader ein Twin-Scroll-Abgasturbolader ist.

6. Brennkraftmaschine nach Anspruch 5,
**dadurch gekennzeichnet, dass** der erste Abschnitt der Abgasanlage (4) in einen ersten Scroll (9) und der zweite Abschnitt der Abgasanlage (4) in einen zweiten Scroll (10) des Abgasturboladers mündet.

7. Verfahren zum Betreiben einer fremd gezündeten Brennkraftmaschine nach einem der Ansprüche 1 bis 6, **gekennzeichnet durch** folgende Verfahrensschritte:
- Einbringen von Luft und Kraftstoff in den ersten Brennraum (2) mit einem mageren Verhältnis (λ > 1),
- Zünden und Verbrennen des Kraftstoff-/Luftgemisches in dem ersten Brennraum (2),
- Abführen des Abgases durch die Abgasanlage (4).
- Einbringen von Luft und Kraftstoff in den zweiten Brennraum (3) mit einem fetten Verhältnis (λ < 1),
- Zünden und Verbrennen des Kraftstoff-/Luftgemisches in dem zweiten Brennraum (3),
- Abführen des Abgases durch die Abgasanlage (4).

8. Verfahren nach Anspruch 7, **gekennzeichnet durch** folgende Verfahrensschritte:
- Anpassen einer Verbrennungsschwerpunktlage in dem ersten Brennraum (2), bis eine Abgastemperatur aus dem ersten Brennraum (2) ein Minimum aufweist,
- Anpassen einer Verbrennungsschwerpunktlage in dem zweiten Brennraum (3), bis eine Abgastemperatur aus dem zweiten Brennraum ein Minimum aufweist.

## Claims

1. Applied-ignition internal combustion engine (1) having at least one first combustion chamber (2) and one second combustion chamber (3) in which a fuel/air mixture can be combusted, wherein an exhaust-gas system (4) is arranged at the combustion chambers, and wherein an exhaust gas from a combustion of the fuel/air mixture flows firstly through an exhaust-gas manifold (5) and subsequently through an exhaust-gas purification system (6) in the exhaust-gas system (4), wherein a first section of the exhaust-gas system (4) from the first combustion chamber (2) to the exhaust-gas purification system (6) is better cooled than a second section of the exhaust-gas system (4) from the second combustion chamber (3) to the exhaust-gas purification system (6),
**characterized in that** the first combustion chamber (2) is operable with a lean (λ > 1) fuel/air mixture and the second combustion chamber (3) is operable with a rich (λ < 1) fuel/air mixture, wherein an overall exhaust-gas lambda value at the inlet into the exhaust-gas purification system (6) is stoichiometric (λ = 1).

2. Internal combustion engine according to Claim 1,
**characterized in that** a turbine housing (7) of an exhaust-gas turbocharger (8) is arranged in the exhaust-gas system (4) between the exhaust-gas manifold (5) and the exhaust-gas purification system (6).

3. Internal combustion engine according to Claim 1 or 2,
**characterized in that** the exhaust-gas manifold (5) is integrated at least in certain sections in a cylinder head of the internal combustion engine (1).

4. Internal combustion engine according to any of Claims 1 to 3,
**characterized in that** the exhaust-gas manifold (5) is cooled, in particular liquid-cooled.

5. Internal combustion engine according to any of Claims 2 to 4,
**characterized in that** the exhaust-gas turbocharger is a twin-scroll exhaust-gas turbocharger.

6. Internal combustion engine according to Claim 5,
**characterized in that** the first section of the exhaust-gas system (4) opens into a first scroll (9) and the second section of the exhaust-gas system (4) opens into a second scroll (10) of the exhaust-gas turbocharger.

7. Method for operating an applied-ignition internal combustion engine according to any of Claims 1 to 6,
**characterized by** the following method steps:
- introducing air and fuel into the first combustion chamber (2) with a lean ratio (λ > 1),
- igniting and combusting the fuel/air mixture in the first combustion chamber (2),
- discharging the exhaust gas through the exhaust-gas system (4),
- introducing air and fuel into the second combustion chamber (3) with a rich ratio (λ < 1),
- igniting and combusting the fuel/air mixture in the second combustion chamber (3),
- discharging the exhaust gas through the exhaust-gas system (4).

8. Method according to Claim 7,
**characterized by** the following method steps:
- adapting a combustion center of gravity position in the first combustion chamber (2) until an exhaust-gas temperature from the first combustion chamber (2) is at a minimum,
- adapting a combustion center of gravity position in the second combustion chamber (3) until an exhaust-gas temperature from the second combustion chamber is at a minimum.

## Revendications

1. Moteur à combustion interne à allumage commandé (1), comprenant au moins une première chambre de combustion (2) et une deuxième chambre de combustion (3) dans lesquelles un mélange carburant/air peut être brûlé, dans lequel un système de gaz d'échappement (4) est disposé au niveau des chambres de combustion, et dans lequel des gaz d'échappement provenant d'une combustion du mélange carburant/air passent d'abord par un collecteur de gaz d'échappement (5) et ensuite par un système de dépollution des gaz d'échappement (6) dans le système de gaz d'échappement (4), dans lequel une première section du système de gaz d'échappement (4) allant de la première chambre de combustion (2) au système de dépollution des gaz d'échappement (6) est mieux refroidie qu'une deuxième section du système de gaz d'échappement (4) allant de la deuxième chambre de combustion (3) au système de dépollution des gaz d'échappement (6),
**caractérisé en ce que** la première chambre de combustion (2) peut fonctionner avec un mélange carburant/air pauvre (X > 1) et la deuxième chambre de combustion (3) peut fonctionner avec un mélange carburant/air riche (X < 1), dans lequel un lambda total des gaz d'échappement est stœchiométrique (X = 1) à l'entrée dans le système de dépollution des gaz d'échappement (6).

2. Moteur à combustion interne selon la revendication 1, **caractérisé en ce qu'**un carter de turbine (7) d'un turbocompresseur de gaz d'échappement (8) est disposé dans le système de gaz d'échappement (4) entre le collecteur de gaz d'échappement (5) et le système de dépollution des gaz d'échappement (6).

3. Moteur à combustion interne selon la revendication 1 ou 2, **caractérisé en ce que** le collecteur de gaz d'échappement (5) est intégré au moins par endroits dans une culasse de cylindre du moteur à combustion interne (1).

4. Moteur à combustion interne selon l'une quelconque des revendications 1 à 3, **caractérisé en ce que** le collecteur de gaz d'échappement (5) est refroidi, en particulier refroidi par liquide.

5. Moteur à combustion interne selon l'une quelconque des revendications 2 à 4, **caractérisé en ce que** le turbocompresseur de gaz d'échappement est un turbocompresseur de gaz d'échappement à deux volutes.

6. Moteur à combustion interne selon la revendication 5, **caractérisé en ce que** la première section du système de gaz d'échappement (4) débouche dans une première volute (9) et la deuxième section du système de gaz d'échappement (4) débouche dans une deuxième volute (10) du turbocompresseur de gaz d'échappement.

7. Procédé permettant de faire fonctionner un moteur à combustion interne à allumage commandé selon l'une quelconque des revendications 1 à 6, **caractérisé par** les étapes de procédé suivantes consistant à :
- introduire de l'air et du carburant dans la première chambre de combustion (2) avec un rapport pauvre (X > 1),
- allumer et brûler le mélange carburant/air dans la première chambre de combustion (2),
- évacuer les gaz d'échappement à travers le système de gaz d'échappement (4),
- introduire de l'air et du carburant dans la deuxième chambre de combustion (3) avec un rapport riche (X < 1),
- allumer et brûler le mélange air/carburant dans la deuxième chambre de combustion (3),
- évacuer les gaz d'échappement à travers le système de gaz d'échappement (4).

8. Procédé selon la revendication 7, **caractérisé par** les étapes de procédé suivantes consistant à :
- adapter une position de centre de gravité de combustion dans la première chambre de combustion (2) jusqu'à ce qu'une température de gaz d'échappement issue de la première chambre de combustion (2) présente un minimum,
- adapter une position de centre de gravité de combustion dans la deuxième chambre de combustion (3) jusqu'à ce qu'une température de gaz d'échappement issue de la deuxième chambre de combustion présente un minimum.
